# EUROPEAN PATENT APPLICATION

(11) **EP 1 762 942 A2**
(43) Date of publication of application: **14.03.2007**
(21) Application number: 06300941.9
(22) Date of filing: 12.09.2006
(51) Int. Cl.: G06F 13/38

(54) **Method and apparatus for a configurable data path interface**

(30) Priority: 13.09.2005 US 225579
(71) Applicant: ALCATEL, 75008 Paris (FR)
(72) Inventor: Pike, Dion, Stittsville Ontario K2S 1J6 (CA); Megarity, Mark R., Ottawa Ontario K2C 3B8 (CA)
(74) Representative: Hervouet, Sylvie

(57) **Abstract**

A method and apparatus for providing a configurable data path interface is provided. In accordance with at least one embodiment of the present invention, one or more line processing cards may be configured to support interfaces having various attributes, such as data rate, numbers of data bits, redundancy or lack thereof, clocking, electrical signal characteristics, etc. For example, a line processing card capable of processing at least 10 gigabits per second (Gbps) over a 16-bit-wide data path using dual edge (e.g., double data rate (DDR)) clocking can be configured to operate according to those attributes or other attributes, such as other data rates (e.g., 5 Gbps or 2.5 Gbps), other data path widths (e.g., 8 bits), and/or other clocking techniques (e.g., single data rate (SDR)), in either redundant or non-redundant configurations.

## Description

### CROSS-REFERENCE TO RELATED APPLICATIONS

### BACKGROUND OF THE INVENTION

### (1) Field of the Invention

The present invention relates generally to data communications and more particularly to a configurable data path interface.

### (2) Description of the Related Art

Data communication equipment involves components coupled to one another via interfaces. Several different types of interfaces exist. The interfaces may differ from one another with respect to various attributes, such as data rate, numbers of data bits, redundancy or lack thereof, clocking, electrical signal characteristics, etc. Given so many potentially different attributes, it can be complicated to provide appropriate interfaces for various types of data communication equipment.

One of the challenges in designing high-data-rate line processing cards in modem routers and switches is that often the interfaces to these line processing cards are for different media with different standard interfaces. Compounding the problem is that fact that components associated with the physical interface are often placed on physically different printed circuit boards than the components associated with the line processing cards (e.g., for flexibility and re-use purposes). An additional complication arises when there is a requirement for line card redundancy (which is often the case in carrier- grade environments). Modern high-data-rate data path standards like System Packet Interface Level 4, Phase 2, (SPI4.2) do not account for all these issues, thus complicating design of equipment and causing different interface translation functions depending on the media type.

Current high-data-rate (e.g., 10 gigabit per second (10 Gbps or 10G)) physical interfaces such as SPI4.2 are not flexible enough to accommodate various bandwidths (e.g., 10G, 5G, 2.5G) and data path widths (e.g., 16 bits, 8 bits) without wasting capacity or requiring speed down (flow control). For example, SPI4.2 specifies 16 data bits and one clock signal. An attempt to use a 10G SPI4.2 interface for redundant 2.5G line processing cards would require flow control on the cards to achieve a 50% speed down.

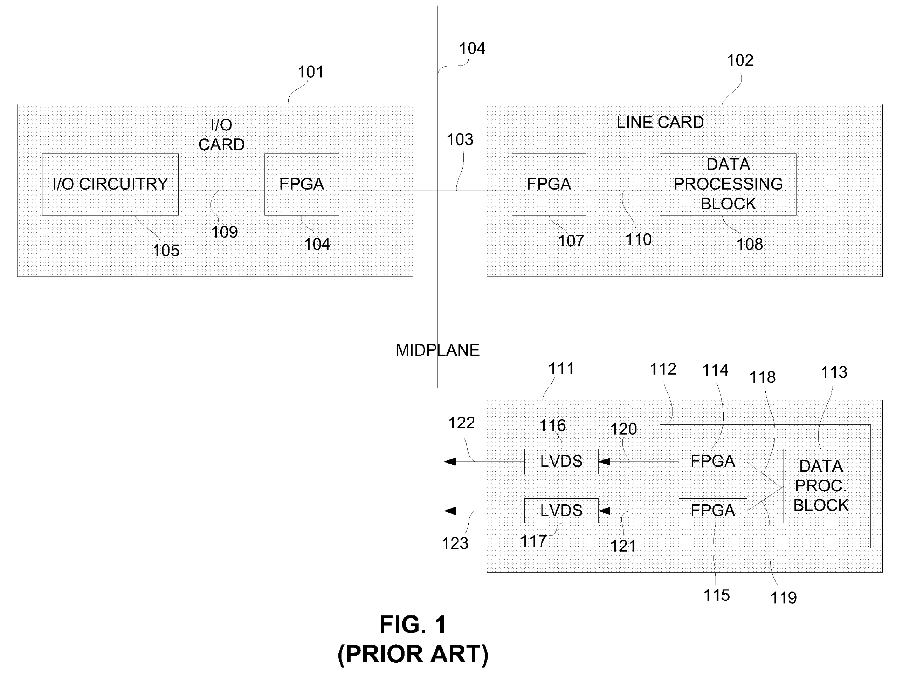

Figure 1 is a block diagram illustrating known data communication equipment. Input/output (I/O) card 101 is coupled to line card 102 via coupling 103 over midplane 104. I/O card 101 comprises I/O circuitry 105 coupled to field programmable gate array (FPGA) 106 via coupling 109. Line card 102 comprises data processing block 108 coupled to FPGA 107 via coupling 110. FPGA 106 of I/O card 101 is coupled to FPGA 107 of line card 102 via coupling 103.

The architecture of line card 102 can complicate implementation of redundant interfaces. For example, redundant line card 111 comprises line card block 112 and low-voltage differential signaling (LVDS) transceivers 116 and 117. Line card block 112 comprises data processing block 113, FPGA 114, and FPGA 115. Data processing block 113 is coupled to FPGA 114 via coupling 118 and FPGA 115 via coupling 119. FPGA 114 is coup led to LVDS transceiver 116 via coupling 120. FPGA 115 is coupled to LVDS transceiver 117 via coupling 121. LVDS transceiver 116 is coupled to coupling 122, and LVDS transceiver 117is coupled to coupling 123.

As illustrated, separate implementation of FPGAs 114 and 115, as well as LVDS transceivers 116 and 117, complicates design of a line card of that architecture and also inhibits implementation of multiple interfaces using a single line card design. Accordingly, economies of scale and scope, as well as potential for efficient product lining, are limited by such architecture.

Thus, a technique is needed to efficiently provide interfaces capable of accommodating various data communication equipment.

### BRIEF DESCRIPTION OF THE SEVERAL VIEWS OF THE DRAWINGS

The present invention may be better understood, and its features made apparent to those skilled in the art by referencing the accompanying drawings.

Figure 1 is a block diagram illustrating known data communication equipment.

Figure 2 is a block diagram illustrating data communication equipment in accordance with at least one embodiment of the present invention.

Figure 3 is a block diagram illustrating a configuration of data communication equipment with redundant line processing cards in accordance with at least one embodiment of the present invention.

Figure 4 is a block diagram illustrating data communication equipment configured for redundant operation in accordance with at least one embodiment of the present invention.

Figure 5 is a flow diagram illustrating a process for providing a line processing card in accordance with at least one embodiment of the present invention.

Figure 6 is a block diagram illustrating implementation of an embodiment of the present invention in a network.

Figure 7 is a timing diagram illustrating clock jitter.

Figure 8 is a time domain diagram illustrating a rise time of a signal.

Figure 9 is a frequency domain diagram illustrating spectral content in accordance with Fourier series analysis of a signal.

Figure 10 is a timing diagram illustrating a clock signal and data to be sampled with reference to the clock signal according to a SDR and a DDR.

Figure 11 is a timing diagram illustrating data traffic and control traffic.

The use of the same reference symbols in different drawings indicates similar or identical items.

### DETAILED DESCRIPTION OF THE INVENTION

A method and apparatus for providing a configurable data path interface is provided. In accordance with at least one embodiment of the present invention, one or more line processing cards may be configured to support interfaces having various attributes, such as data rate, numbers of data bits, redundancy or lack thereof, clocking, electrical signal characteristics, etc. For example, a line processing card capable of processing at least 10 gigabits per second (Gbps) over a 16-bit-wide data path (e.g., data bus) using dual edge (e.g., double data rate (DDR)) clocking can be configured to operate according to those attributes or other attributes, such as other data rates (e.g., 5 Gbps or 2.5 Gbps), other data path widths (e.g., 8 bits), and/or other clocking techniques (e.g., single data rate (SDR)), in either redundant or non-redundant configurations.

By making an interface capable of high-data-rate (e.g., 10G) operation more flexible in terms of data path bits and clock signals, the same interface can be used for two pairs of lower-data-rate (e.g., 2.5G) redundant line processing cards without the need for a change in clock frequency. Such functionality may be implemented in a manner that provides compatibility with existing standards, for example, by implementing it as "extensions" to an existing standard (e.g., the SPI4.2 standard).

Existing data path interface standards, such as SPI4.2, are rather inflexible, which limits their usefulness, especially in environments where interoperation with interfaces that differ from the standards would be desirable. For example, SPI4.2 specifies a 16-bit data path width using low-voltage differential signaling (LVDS) with one LVDS DDR clock. A wide data path, such as a 16-bit data path, referenced to a single clock can be difficult to implement because of the potential for clock skew among the several data lines of the data path. For example, given a dielectric constant of a typical printed circuit board (PCB) insulating material, such as Flame Retardant Type 4 (FR4) fiberglass, signals typically propagate along the PCB at a rate such that their propagation delay is approximately 195 picoseconds per inch of material. Thus, unless the conductors (PCB traces) of the several data lines are all the same length, data bits propagating along the data lines will not reach a destination at precisely the same time. While some amount of clock skew can be accommodated, clock skew can impose limits on performance, for example, a limit on maximum data rates that may be supported by interfaces. By reducing clock skew, interface data rates can be increased.

Another issue concerning clock timing can arise in redundant systems. Some systems have a card shelf for line processing cards on one side (e.g., a front side) and a card shelf for I/O cards on a second side (e.g., a rear side), with the front side and the rear side meeting at a midplane that couples the line processing cards to the I/O cards. When such systems are used to provide redundant configurations, a first line processing card and a first I/O card may lie directly opposite each other across the midplane, while a redundant card (e.g., a second line processing card or a second I/O card) may be offset to either side of the first line processing card or the first I/O card. Consequently, the conductors coupling the first line processing card and the first I/O card may be relative short and straight, while the conductors coupling the first line processing card to the second I/O card or the first I/O card to the second line processing card may be longer and may follow a more complicated route. Accordingly, the timing relationships of the clock and data lines to a redundant card may be more complicated and varied than those for cards lying directly opposite each other. The more forgiving timing margins of SDR clocking may be advantageous in redundant configurations to accommodate the potentially greater complexity of timing relationships in redundant configurations. At least one embodiment of the present invention may be used to implement redundant configurations using SDR clocking so as to gain such advantage.

In accordance with at least one embodiment of the present invention, it can be beneficial to implement a wide data path with several clocks and to provide flexibility in configuring the relationship between the data lines of the data path and the clocks. Such flexibility can be used to support different modes of operation. For example, a 16-bit LVDS data path may be implemented with two LVDS clocks, allowing a first group of eight bits of the data path to reference a first clock and a second group of eight bits of the data path to reference a second clock. By reducing the number of data lines that reference a single clock, the constraints on routing data lines along a PCB and/or across a boundary such as a backplane and/or midplane and the resultant clock skew can be reduced.

Furthermore, the same routing of data lines and clock lines can be treated as a single high-data-rate (e.g., 10G) interface or two lower-data-rate (e.g., 5G or 2.5G) interfaces. As such, the same line card, can easily be populated in a system in which it directly communicates with a single OC192 I/O card (or other I/O card with a nominal data rate of approximately 10Gbps) or two OC48 I/O cards (or other I/O cards with a nominal data rate of approximately 2.5Gbps).

Many other configurations are possible. For example, by providing four clocks, a card capable of a high data rate (e.g., 10G) can be used to provide four lower-data-rate (e.g., 2.5G) interfaces. As another example, a single intermediate-data-rate interface (e.g., 5G) may be implemented using eight data lines of 16 data lines to provide an eight-bit LVDS data path with one LVDS DDR clock. As yet another example, if an SDR clock is provided instead of the DDR clock of the above example, a lower-data-rate (e.g., 2.5G) interface may be implemented using eight data lines to provide an eight-bit LVDS data path with one LVDS SDR clock.

A significant benefit of controlling the interface bandwidth (e.g., using the 2.5G mode for a 2.5G card, instead of the 2.5G card using a 10G interface) is not having to deal with the speed down (and associated flow control) on the line processing card. As flow control mechanisms, such as back-pressure flow control, typically use some of the available bandwidth of an interface, excessive reliance on flow control mechanisms can reduce efficiency of the interface. When the bandwidth used by flow control communications and other overhead communications exceeds the difference between the total bandwidth physically supported by an interface card and the bandwidth of the data being communicated, problems such as delay or loss of data can occur. Also, a first-in-first-out (FIFO) buffer is used to accommodate latency from the time data are transmitted to the time the data are received to time a back-pressure flow control signal is sent to the time the back-pressure flow control signal is received at the component that transmitted the data. The capacity of the input FIFO buffer increases in proportion to the speed of the interface in order to absorb the data transmitted after the backpressure from the receiving element is triggered. Implementing larger input FIFO buffers involves more complexity, which increases the difficulty of producing devices incorporating the larger input FIFO buffers. Moreover, supporting higher interface data rates, which is generally desirable, further aggravates input FIFO buffer capacity requirements, particularly when heavy reliance is placed on flow control mechanisms. Also, some portions of data communication equipment may impose limits on flow control mechanisms. For example, a scheduler may utilize a scheduling calendar of finite capacity, and excessive back pressure from flow control may cause the scheduler to exceed the limits of the scheduling calendar, which could also cause loss of data. By avoiding heavy reliance on flow control mechanisms, one or more embodiments of the present invention may be practiced so as to minimize such problems.

In accordance with at least one embodiment of the present invention, a single interface card used in a high-data-rate application may be re-used in intermediate and/or lower data rate applications, either with or without providing redundancy. For example, with a first line processing card that supports a 16-bit data path width, one group of eight data lines and one clock line can be routed to a second line processing card, while a second group of the other eight data lines and a second clock line can be routed to a third line processing. Thus, data from the first line processing card can be redundantly provided to both the second and third line processing cards. As another example, if redundancy is not desired, all 16 data lines and two clock lines can be routed to another single line processing card in a non-redundant system.

It should be noted that not all of the bandwidth of a line processing card need be used when such a line processing card is used to support an interface of lesser bandwidth than the full bandwidth of which the line processing card is capable. For example, a 2.5G or below I/O card may be dedicated to an existing 10G line processing card (to gain re-use of the line processing card even though it has further processing power available). By reusing existing line processing cards and/or manufacturing a single type of line processing card and configuring instances of such a card variously to support different interfaces, economies of scale and scope can be obtained, reducing costs such as design, verification, and production costs, increasing product lining (with improved line depth and line consistency), and increasing profitability and customer satisfaction. Also, rapid changes in technology and standards can be more easily accommodated. For example, a card designed to support a SPI4.2 interface may be adapted to support a 10G packet link (XPL) interface.

By configuring a line processing card to utilize different numbers of data lines and/or different clocking techniques (e.g., DDR and SDR), different interface data rates may be supported without altering the frequency of the clock signal. Thus, hardware components, such as fixed frequency oscillator, need not be altered, and a card having such a component may be re-used without modification and without the need for supplemental components to be included to accommodate different clock frequencies. Also, use of the same clock frequency avoids potential complications concerning regulatory requirements, such as additional electromagnetic interference (EMI)/electromagnetic compliance (EMC) testing and registration, as well as additional testing and verification to assure reliability and interoperability at different clock frequencies.

By allowing operability that conforms to a high-data-rate interface standard (e.g., SPI4.2) and interoperability with other interfaces of lower data rates (e.g., 5G and 2.5G), as well as interoperability with other high-data-rate interfaces (e.g., XPL), one or more embodiments provide functionality that can exceed that of systems that are merely compatible with a single standard. The increased flexibility can be further enhanced by providing for selection between redundant and non-redundant modes.

A method and apparatus in accordance with at least one embodiment of the present invention may be implemented as a protocol engine adapted to implement an interface operable in a plurality of modes, wherein for each mode, the bandwidth of that mode is function of a number of data lines utilized by the mode and a clocking technique utilized by the mode. Preferably, the clock frequency remains the same among all of the modes.

While many modes of operation are possible in accordance with at least one embodiment of the present invention, the following examples are illustrative. As one example, all data path lines (e.g., 16 bits) can be referenced to a single DDR clock. Such an example provides an interface of maximum bandwidth using a minimum number of conductors. As another example, all data path lines (e.g., 16 bits) can be used for a single interface, but divided into two groups of fewer data path lines (e.g., eight bits), with each group referenced to a separate DDR clock (e.g., two DDR clocks for the two groups). Such an example provides a single interface of maximum bandwidth that reduces clock-data skew. As a third example, fewer than all of the data path lines (e.g., eight bits) are used for each of several (e.g., two) interfaces, with the several interfaces referencing different DDR clocks. Such an example provides several (e.g., two) interfaces, each with bandwidth (e.g., 5G) less than the total bandwidth of the line processing card. For such an example, control traffic can be modified so that each of the interfaces receives the control traffic. For example, if 16-bit control words are used and if eight data path lines are used for each interface, the control words can be sent as two sequential halves (e.g., a first eight bits of a control word followed by a second eight bits of a control word). As a fourth example, fewer than all of the data path lines (e.g., eight bits) are used for each of several (e.g., two) interfaces, with the several interfaces referencing different SDR clocks. Such an example provides several (e.g., two) interfaces, each with bandwidth (e.g., 2.5G) less than the total bandwidth of the line processing card. Control traffic can be modified as described above.

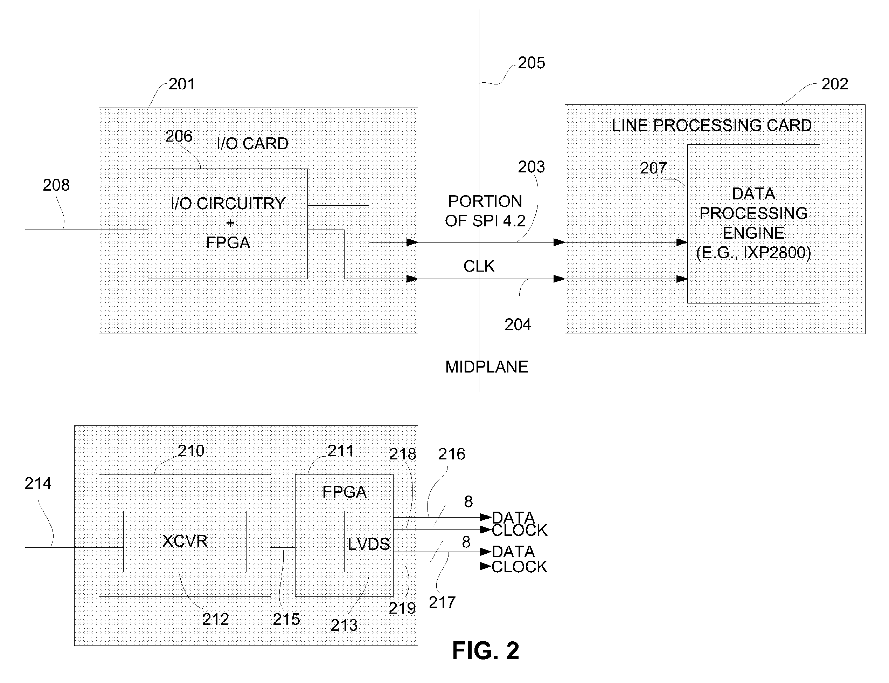

Figure 2 is a block diagram illustrating data communication equipment in accordance with at least one embodiment of the present invention. I/O card 201 is coupled to line card 202 via data path lines 203 and clock line or lines 204 across midplane 205. I/O card 201 comprises an I/O block 206 comprising I/O circuitry and an FPGA. Line card 202 comprises data processing engine 207 (e.g., a 10G data processing engine, such as an Intel IXP2800 network processor). I/O block 206 of I/O card 201 is coupled to coupling 208 and is also coupled to data processing engine 207 of data processing block 202 via data path lines 203 and clock line or lines 204. Data path lines 203 may implement a standard interface, for example, a SPI4.2 interface, and may be implemented as a full width data path or as a portion of the full number of data path lines of a full width data path.

I/O card 201 may be implemented, for example, as illustrated by I/O card 209. I/O card 209 comprises I/O circuitry 210 and FPGA 211. I/O circuitry 210 comprises transceiver 212. FPGA 211 comprises LVDS transceiver 213. Transceiver 212 is coupled to coupling 214. I/O circuitry 210 is coupled to FPGA 211 via coupling 215. LVDS transceiver 213 is coupled to data path lines 216, data path lines 217, clock line 218, and clock line 219. By configuring FPGA 211 to implement data path lines 216 and 217 and clock lines 218 and 219 as a full width data path and clock line or any combination of portions of the full width data path and clock lines, the architecture of I/O card 209 can support full or partial (e.g., fractional) bandwidth interfaces, allowing reutilization of I/O card and line processing card designs across a product line, resulting in economies of scale and scope.

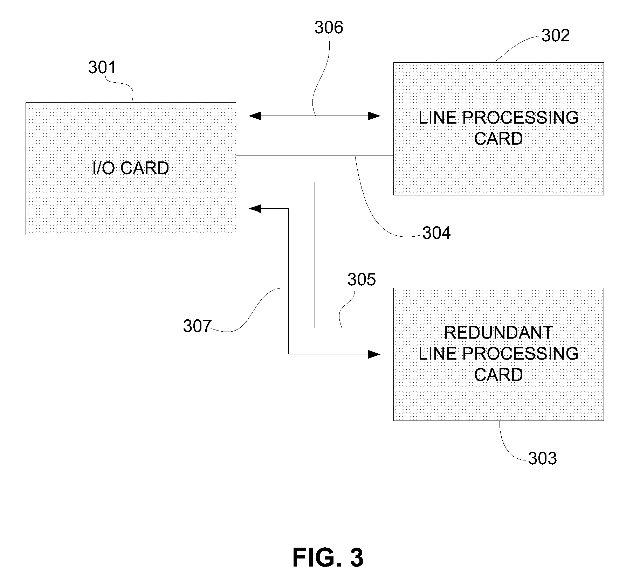

Figure 3 is a block diagram illustrating a configuration of data communication equipment with redundant line processing cards in accordance with at least one embodiment of the present invention. I/O card 301 is coupled to line processing card 302 via interface 304 and to redundant line processing card 303 via interface 305. Interface 304 provides data path 306 between I/O card 301 and line processing card 302. Interface 305 provides data path 307 between I/O card 301 and redundant line processing card 303. In a redundant configuration, I/O card 301 can pass identical data over data paths 306 and 307, such that line processing card 302 and redundant line processing card 303 receive identical data from I/O card 301.

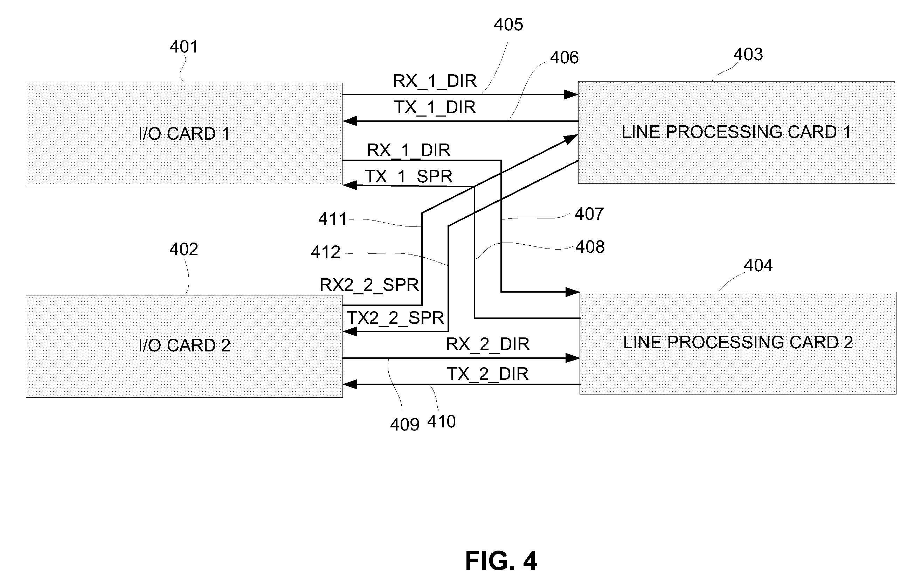

Figure 4 is a block diagram illustrating data communication equipment configured for redundant operation in accordance with at least one embodiment of the present invention. I/O card 401 is coupled to line processing card 403 via a first interface comprising receive data path 405 and transmit data path 406. The first interface preferably comprises a receive clock and a transmit clock, with receive data communicated via receive data path 405 referenced to the receive clock and transmit data communicated via transmit data path 406 referenced to the transmit clock. I/O card 401 is coupled to line processing card 404 via a second interface comprising receive data path 407 and transmit data path 408. The second interface preferably comprises a receive clock and a transmit clock, with receive data communicated via receive data path 407 referenced to the receive clock and transmit data communicated via transmit path 408 referenced to the transmit clock.

I/O card 402 is coupled to line processing card 404 via a third interface comprising receive data path 409 and transmit data path 410. The third interface preferably comprises a receive clock and a transmit clock, with receive data communicated via receive data path 409 referenced to the receive clock and transmit data communicated via transmit data path 410 referenced to the transmit clock. I/O card 402 is coupled to line processing card 403 via a fourth interface comprising receive data path 411 and transmit data path 412. The fourth interface preferably comprises a receive clock and a transmit clock, with receive data communicated via receive data path 411 referenced to the receive clock and transmit data communicated via data path 412 referenced to the transmit clock.

Interconnections such as those depicted in Figure 4 can be used to provide several types of non-redundant and redundant configurations. For example, receive data paths 405 and 409 and transmit data paths 406 and 410 or, alternatively, receive data paths 407 and 411 and transmit data paths 408 and 412 can be used to provide a non-redundant configuration. As another example, receive data paths 405 and 407 and transmit data paths 406 and 408 or, alternatively, receive data paths 409 and 411 and transmit data paths 410 and 412 can be used to provide a configuration with redundant line processing cards 403 and 404. As another example, receive data paths 405 and 411 and transmit data paths 406 and 412 or, alternatively, receive data paths 407 and 409 and transmit data paths 408 and 410 may be used to provide a configuration with redundant I/O cards 401 and 402.

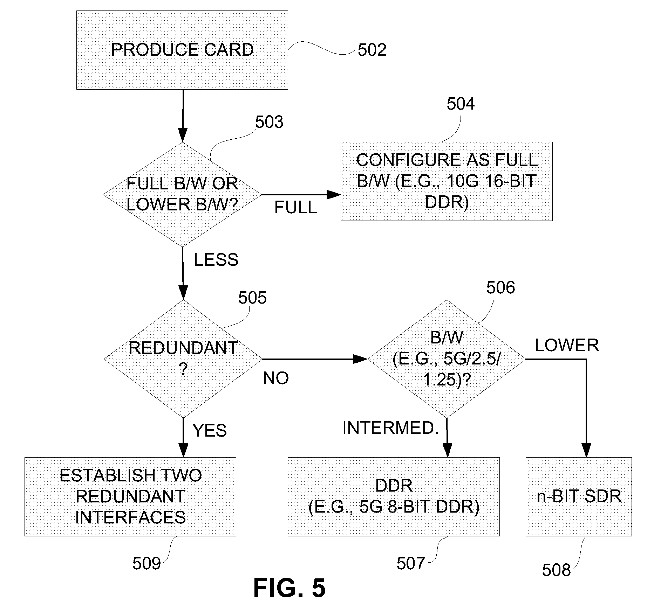

Figure 5 is a flow diagram illustrating a process for providing a line processing card in accordance with at least one embodiment of the present invention. In step 502, a line processing card is produced. In step 503, a determination is made as to whether the line processing card is to operate at a full data rate of which it is capable or at a lower data rate (i.e., with a full data rate interface). If the line processing card is to operate at the full data rate of which it is capable, the process continues to step 504, where the card is configured to provide an interface operable at the full data rate. For example, if a line processing card is capable of operating at a nominally 10G data rate using a 16-bit data path width and DDR clocking, the line processing card is configured to provide an interface at the full nominally 10G data rate using the full data path width and DDR clocking.

If the line processing card is to operate at a lower data rate than the full data rate of which the line processing card is capable, the process continues to step 505. In step 505, a determination is made as to whether or not the interface being configured is to provide redundancy. If redundancy is to be provided, more than one (e.g., two) instances of the interface are to be configured, and redundant interfaces are established in step 509. Specific aspects (e.g., fractional data rate, data path width, clocking, etc.) of an interface that is to be configured as a redundant interface may be configured in the same manner described with respect to a non-redundant interface in steps 506, 507, and 508. Accordingly, the process may proceed from step 509 to step 506 to configure redundant interfaces, and steps 506, 507, and 508 may be repeated for each instance of such interfaces.

If redundancy is not to be provided, the process continues to step 506. In step 506, a determination is made as to a data rate (e.g., a partial/fractional data rate) of which an interface is to be provided. If an interface is to be provided with a data rate that is to be approximately half of the data rate of which the line processing card is capable, the process continues to step 507. In step 507, the line processing card may be configured to provide the interface using half of a number of data path lines of the full data path width available from the line processing card, wherein those half of the number of data path lines are referenced to clock signal using DDR clocking. For example, if a line processing card is capable of a nominally 10G data rate using a 16-bit data path width and DDR clocking, a nominally 5G interface may be configured using eight (i.e., half) of the 16 data path lines and DDR clocking.

If an interface is to be provided with a data rate that is to be approximately one quarter (or less) of the data rate of which the line processing card is capable, the process continues to step 508. In step 508, the line processing card may be configured to provide the interface using half (or fewer) of a number of data path lines of the full data path width available from the line processing card, wherein those half (or fewer) of the number of data path lines are referenced to clock signal using SDR clocking. For example, if a line processing card is capable of a nominally 10G data rate using a 16-bit data path width and DDR clocking, a nominally 2.5G interface may be configured using eight (i.e., half) of the 16 data path lines and SDR clocking. Interfaces at even lower data rates may be configured using fewer than half of the data path lines and SDR clocking.

Examples of apparatus that may be used to implement at least one embodiment of the present invention, for example, a method in accordance with the description of Figure 5, include, but are not limited to, programmable devices (e.g., an FPGA or a network processor, such as an Intel IXP2800 network processor) and other devices. Programmable devices may be programmed when manufactured, when used in manufacturing of a product, for example, an I/O card or a line processing card, or at a later time after a product has been manufactured, for example, when the product is being installed, configured, reconfigured, modified, refurbished, remanufactured, etc.

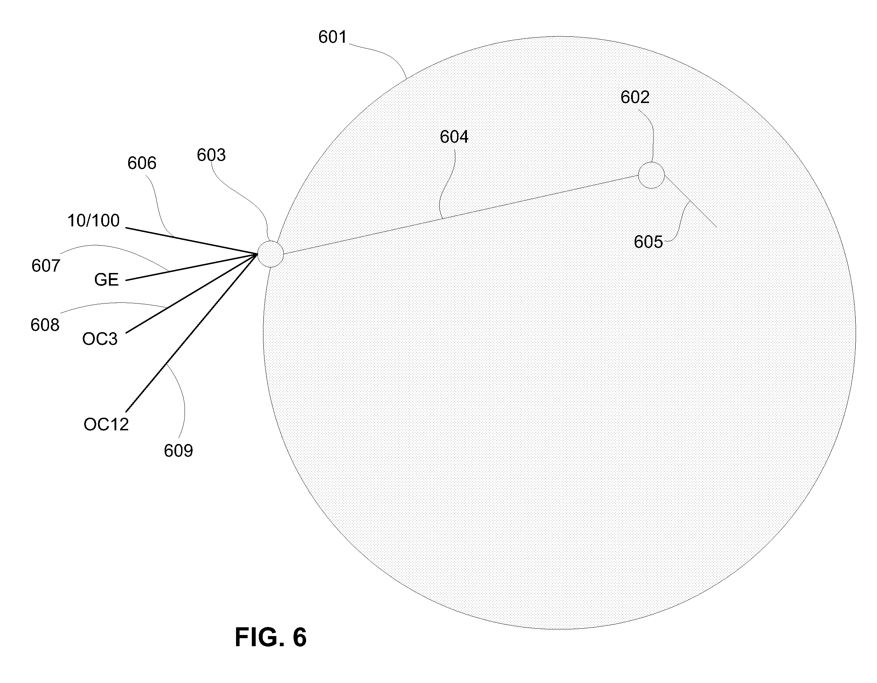

Figure 6 is a block diagram illustrating implementation of an embodiment of the present invention in a network. A router 603 implemented in accordance with at least one embodiment of the present invention may be utilized in a network 601. For example, router 603 may be coupled to other nodes in network 601, such a router 602 via network connection 604. Router 602 may be coupled to other nodes in network 601, for example, via network connection 605. Router 603 may provide several types of interfaces, for example, 10-megabit-per-second/100-megabit-per-second (10/100) ethernet interface 606, gigabit ethernet (GE) interface 607, optical carrier level 3 (OC3) interface 608, and/or optical carrier level 12 (OC12) interface 609. The specific interfaces mentioned above are illustrative examples, and embodiments of the invention may be practiced with other interfaces, for example, interfaces supporting different data rates and/or formats.

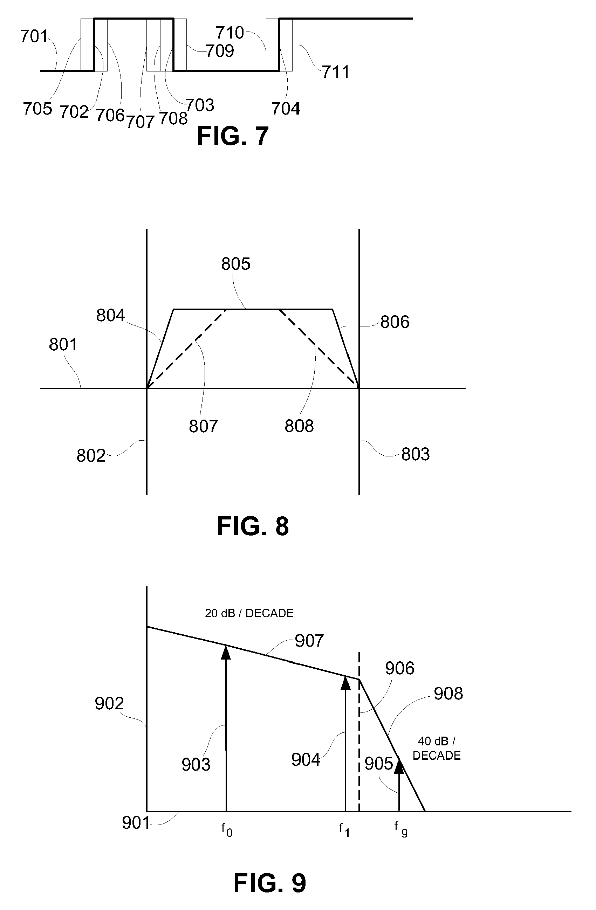

Figure 7 is a timing diagram illustrating clock jitter. A first rising edge of clock signal 701 nominally occurs at the time of rising edge 702. However, if clock jitter affects the timing of the first rising edge, the first rising edge may occur earlier at the time of rising edge 705 or later at the time of rising edge 706. A first falling edge of clock signal 701 nominally occurs at the time of falling edge 703. However, if clock jitter affects the timing of the first falling edge, the first falling edge may occur earlier at the time of falling edge 707 or falling edge 708 or later at the time of falling edge 709. A second rising edge nominally occurs at the time of rising edge 704. However, if clock jitter affects the timing of the second falling edge, the second falling edge may occur earlier at the time of falling edge 710 or later at the time of falling edge 711. Clock jitter tends to spectrally spread electromagnetic energy in the frequency domain, causing the electromagnetic energy to be distributed over a range of frequencies at a lower peak amplitude than would be exhibited by a clock signal free of clock jitter. However, excessive clock jitter could violate set-up and hold times of data referenced to the clock, resulting in data errors. Limiting a transition rate of a clock signal in a controlled manner can introduce a controlled amount of clock jitter that can reduce peak electromagnetic energy at a fundamental frequency of the clock signal.

Figure 8 is a time domain diagram illustrating a rise time of a signal. Electromagnetic energy is radiated from conductors over which alternating current (AC) signals pass. Radiated electromagnetic energy can interfere with other electronic circuits and systems and can complicate compliance with regulations limiting permissible radiation of electromagnetic energy. While radiation of electromagnetic energy can be mitigated using techniques such as shielding and filtering, designing circuits and systems to use signals with characteristics that minimize radiation of electromagnetic energy addresses the source of the problem.

The amount and nature of electromagnetic energy that may be radiated by a conductor carrying a signal is a function of characteristics of the signal such as the amplitude of the signal, the frequency of the signal, the duty cycle of the signal, and the transition rate of the signal. While the effective duty cycle of many types of digital signals, such as data signals, cannot be precisely predicted or controlled, as it may be a function of the content of the data being communicated, the duty cycle of other types of digital signals, such as DDR clock signals, is typically at or near 50%, which can be helpful toward reducing electromagnetic emissions. Also, since low-amplitude signaling techniques, such as LVDS, are often employed, it is possible to keep signal amplitudes low so as to minimize electromagnetic emissions. The frequency of digital signals, especially those present at interfaces, is often constrained, for example, by interface standards and interoperability requirements. Thus, of all of the characteristics of signal that can affect the radiation of electromagnetic energy from conductors carrying it, the transition rates of the edges of transitions of the signal may offer the most potential for controlling electromagnetic emission without requiring complex and/or impractical changes to the circuit and/or system.

An example of a portion of a signal (e.g., a half cycle of a clock signal), is illustrated. The portion of the signal is illustrated relative to time axis 801, with the portion of the signal beginning at time 802 and ending at time 803. At time 802, the voltage of the rising edge 804 of the signal rises at a transition rate such that the voltage of the rising edge 804 rises from time axis 801 to level 805 over a rise time. The voltage of the signal then remains at level 805 until it begins to fall back to time axis 801, as illustrated by falling edge 806. The steepness of rising edge 804 and the steepness of falling edge 806, as well as the duration between time 802 and time 803, affect the amount and nature of electromagnetic energy that may be radiated.

By adjusting the duration of rising edge 804 and/or falling edge 806, the transition rates can be controlled so as to minimize electromagnetic emissions while still providing sharp enough edges to assure proper operation. Since data is sampled twice per cycle with reference to a DDR clock, but only once per cycle with reference to a SDR clock, the duration during which data can be sampled with reference to a DDR clock is shorter than the duration during which data can be sampled with reference to a SDR clock. Consequently, the temporal precision of a DDR clock signal is preferably better than the temporal precision of a SDR clock. Accordingly, the transition rates of a SDR clock may be relaxed somewhat relative to the transition rates of a DDR clock. Thus, rising edge 807, which has a longer rise time than rising edge 804, may be suitable for signals (e.g., clock and/or data signals) employing SDR clocking, while rising edge 804 may be suitable for signals (e.g., clock and/or data signals) employing DDR clocking. Similarly, falling edge 808, which has a longer fall time than falling edge 806, may be suitable for signals (e.g., clock and/or data signals) employing SDR clocking, while falling edge 806 may be suitable for signals (e.g., clock and/or data signals) employing DDR clocking.

Accordingly, when clocking is SDR clocking, it can be beneficial to limit a SDR transition rate of an interface signal. When clocking is DDR clocking, a DDR transition rate of an interface signal may be used, wherein the DDR transition rate is faster than the SDR transition rate. Limiting transition rates, such as a SDR transition rate, may be implemented for clock signals, other signals (e.g., data signals), or combinations of clock signals and other signals (e.g., clock signals and data signals). For example, a SDR clock transition rate of a clock signal may be limited, and a SDR data transition rate of a data signal may be limited.

Figure 9 is a frequency domain diagram illustrating spectral content in accordance with Fourier series analysis of a signal. As noted above, electromagnetic energy that may be radiated from a conductor carrying an AC signal can be affected by the frequency and transition times of the AC signal. The relative amplitudes of a fundamental frequency 903 and its harmonics fit within a curve plotted with respect to frequency axis 901 and amplitude axis 902. A break point 906 in the curve exists at a frequency that is the reciprocal of pi times the shorter of the rise time and the fall time. Harmonics with frequencies less than the break point can be expected to decline in amplitude at a rate of 20 dB per octave, as illustrated by segment 907 of the curve. An example of such a harmonic is harmonic 904. Harmonics with frequencies greater than the break point can be expected to decline at a rate of 40 dB per octave, as illustrated by segment 908 of the curve. An example of such a harmonic is harmonic 905.

Since the break point at which the electromagnetic energy trails off more rapidly occurs at a frequency that is inversely proportional to the shorter of the rise time and the fall time, that break point may be lowered in frequency, thereby reducing electromagnetic energy at higher frequencies by increasing the rise time and the fall time of signals. By affording the option of using SDR clocking to facilitate compatibility with lower bandwidth interfaces, slower transitions that are possible with SDR clocking may be used to with one or more embodiments of the invention to reduce electromagnetic emissions and simplify regulatory electromagnetic compliance.

For example, a SDR transition rate may be used for SDR clocking, wherein, if DDR clocking is used, the SDR transition rate is slower than a DDR transition rate used for DDR clocking. For example, a SDR transition rate may be limited to be 20 to 80 percent, 30 to 70 percent, 40 to 70 percent, 40 to 60 percent, or 45 to 55 percent as fast as a DDR transition rate.

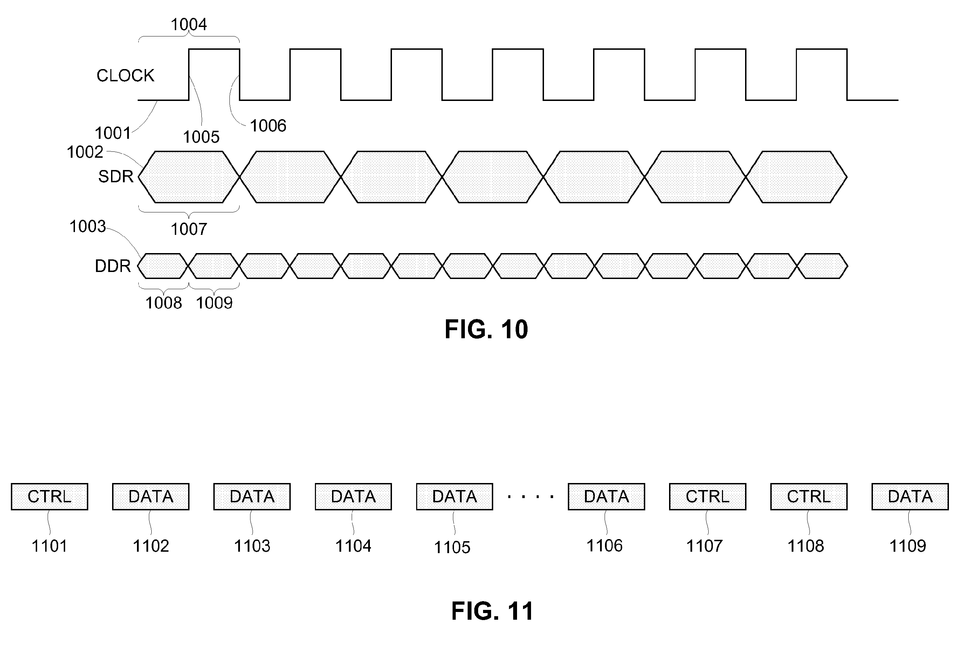

Figure 10 is a timing diagram illustrating a clock signal and data to be sampled with reference to the clock signal according to a SDR and a DDR. SDR data 1002 are sampled with respect to clock 1001 at a rate of one bit per cycle per data path line. DDR data 1003 are sampled with respect to clock 1002 at a rate of two bits per cycle per data path line (one bit per half cycle per data path line). As a SDR example, a bit 1007 of SDR data 1002 is sampled at rising edge 1005 of cycle 1004 of clock 1001. As a DDR example, a first bit 1008 is sampled at rising edge 1005 of cycle 1004 of clock 1001, while a second bit 1009 is sampled at falling edge 1006 of cycle 1004 of clock 1001.

Figure 11 is a timing diagram illustrating data traffic and control traffic. In a typical stream of information communicated via an interface, both data traffic and control traffic are included in the stream. For example, control traffic 1101 may be sent, followed by several instances of data traffic 1102, 1103, 1104, 1105, and 1106. Following that data traffic, more control traffic 1107 and 1108 may be sent, followed by more data traffic 1109. As noted above, the sending of consecutive instances of control traffic 1107 and 1108 can be used to assure that a complete control message is communicated, especially in systems in which the number of bits of the control message exceeds the data path width, for example, when a 16-bit control word is to be communicated via an eight-bit-wide data path.

Thus, a method and apparatus for a configurable data path interface has been presented. Although the invention has been described using certain specific examples, it will be apparent to those skilled in the art that the invention is not limited to these few examples. For example, although the invention has been described with respect to use in a 10G SPI4.2-compliant system, the invention may be used in systems with other types of interfaces that may have other characteristics, for example, other data rates. Other embodiments utilizing the inventive features of the invention will be apparent to those skilled in the art, and are encompassed herein.

## Claims

1. A method comprising:
determining whether a card is to be implemented with a full data rate interface;
when the card is to be implemented with the full data rate interface, configuring the full data rate interface using a full data path width and double-data-rate (DDR) clocking;
when the card is not to be implemented with the full data rate interface, determining whether the card is to be implemented with redundant interfaces;
when the card is not to be implemented with redundant interfaces, configuring a fractional data rate interface of the card using less than the full data path width and clocking selected from a group consisting of DDR clocking and single-data-rate (SDR) clocking.
when the card is to be implemented with redundant interfaces, configuring a fractional data rate interface of the card and a second fractional data rate interface of the card, each of the fractional data rate interface and the second fractional data rate interface using no more than half of the full data path width clocked using clocking selected from a group consisting of DDR clocking and SDR clocking.

2. The method of claim 1 wherein, when the fractional data rate interface is to have a data rate equal to approximately half of the full data rate interface, configuring the fractional data rate interface of the card using less than the full data path width and the clocking selected from the group consisting of the DDR clocking and the SDR clocking further comprises:
configuring the fractional data rate interface of the card using a fractional data path width of half the full data path width and DDR clocking.

3. The method of claim 1 wherein, when the fractional data rate interface is to have a data rate approximately equal to a quarter of the full data rate interface, configuring the fractional data rate interface of the card using less than the full data path width and the clocking selected from the group consisting of the DDR clocking and the SDR clocking further comprises:
configuring the fractional data rate interface of the card using a fractional data path width of half the full data path width and SDR clocking.

4. The method of claim 1 wherein, when the fractional data rate interfaces is to have a data rate of less than a quarter of the full data rate interface, configuring the fractional data rate interface of the card using less than the full data path width and the clocking selected from the group consisting of the DDR clocking and the SDR clocking further comprises:
configuring the fractional data rate interface of the card using a fractional data path width of less than half the full data path width and SDR clocking.

5. The method of claim 1 wherein, when clocking is SDR clocking, limiting a SDR transition rate of an interface signal.

6. The method of claim 5 wherein, when clocking is DDR clocking, utilizing a DDR transition rate of the interface signal, wherein the DDR transition rate is faster than the SDR transition rate.

7. The method of claim 5 wherein limiting the SDR transition rate of the interface signal comprises:
limiting the SDR transition rate of a clock signal.

8. The method of claim 5 wherein limiting the SDR transition rate of the interface signal comprises:
limiting a SDR clock transition rate of a clock signal and a SDR data transition rate of a data signal.

9. Apparatus comp rising:
a programmable device coupled to a plurality of data path lines and a plurality of clock lines, the programmable device adapted to configure the plurality of data path lines and the plurality of clock lines to provide an interface configuration selected from a group consisting of a single full-data-path-width interface utilizing all of the data path lines, a single partial-data-path-width interface utilizing a portion of the data path lines, a plurality of independent partial-data-path-width interfaces each utilizing a respective portion of the data path lines, a plurality of redundant partial-data-path-width interfaces each utilizing a respective portion of the data path lines, and at least one redundant partial-data-path-width interface plus at least one independent partial data-path width interface.

10. The apparatus of claim 9 wherein the interface configuration utilizes a clocking technique selected from a group consisting of single-data-rate clocking and double-data-rate clocking.

11. The apparatus of claim 10 wherein, when the clocking technique is single-data-rate clocking, a limit is imposed on a single-data-rate transition rate of an interface signal.

12. The apparatus of claim 11 wherein, when clocking technique is double-data-rate clocking, a double-data-rate transition rate of the interface signal is utilized, wherein the double-data-rate transition rate is faster than the single-data-rate transition rate.

13. The apparatus of claim 11 wherein the interface signal is a clock signal.

14. The apparatus of claim 9 wherein, when the programmable device is adapted to configure the plurality of data path lines and the plurality of clock lines to provide the interface configuration comprising a single full-data-path-width interface utilizing all of the data path lines, the single full-data-path-width interface utilizes double-data-rate clocking.

15. The apparatus of claim 9 wherein, when the programmable device is adapted to configure the plurality of data path lines and the plurality of clock lines to provide the interface configuration comprising a single partial-data-path-width interface utilizing a portion of the data path lines, the single partial data-path width interface utilizes double-data-rate clocking.

16. The apparatus of claim 9 wherein, when the programmable device is adapted to configure the plurality of data path lines and the plurality of clock lines to provide the interface configuration comprising a single partial-data-path-width interface utilizing a portion of the data path lines, the single partial-data-path-width interface utilizes single-data-rate clocking.

17. The apparatus of claim 9 wherein, when the programmable device is adapted to configure the plurality of data path lines and the plurality of clock lines to provide the interface configuration comprising a plurality of independent partial-data-path-width interfaces each utilizing a respective portion of the data path lines, each of the plurality of independent partial-data-path-width interfaces utilizes double-data-rate clocking.

18. The apparatus of claim 9 wherein, when the programmable device is adapted to configure the plurality of data path lines and the plurality of clock lines to provide the interface configuration comprising a plurality of independent partial-data-path-width interfaces each utilizing a respective portion of the data path lines, each of the plurality of independent partial-data-path-width interfaces utilizes single-data-rate clocking.

19. The apparatus of claim 9 wherein, when the programmable device is adapted to configure the plurality of data path lines and the plurality of clock lines to provide the interface configuration comprising a plurality of redundant partial-data-path-width interfaces each utilizing a respective portion of the data path lines, each of the plurality of redundant partial-data-path-width interfaces utilizes double-data-rate clocking.

20. The apparatus of claim 9 wherein, when the programmable device is adapted to configure the plurality of data path lines and the plurality of clock lines to provide the interface configuration comprising a plurality of redundant partial-data-path-width interfaces each utilizing a respective portion of the data path lines, each of the plurality of redundant partial-data-path-width interfaces utilizes single-data-rate clocking.
